# EUROPEAN PATENT APPLICATION

(11) **EP 3 042 565 A1**
(43) Date of publication of application: **13.07.2016**
(21) Application number: 14199350.1
(22) Date of filing: 19.12.2014
(51) Int. Cl.: A23C 9/13, A23C 9/142, A23C 9/15, A23L 33/17

(54) **Yoghurt with native whey proteins and processes for production thereof**

(71) Applicant: Tine SA, 0187 Oslo (NO)
(72) Inventor: Jorgensen, Camilla Elise, 0592 OSLO (NO); Johansen, Anne-Grethe, 1430 ÅS (NO); Hoffmann, Tom Kristian, 1550 HØLEN (NO); Skeie, Siv Borghild, 1445 DRØBAK (NO); Abrahamsen, Roger Kjell, 1430 ÅS (NO); Rukke, Elling-Olav, 1514 MOSS (NO)
(74) Representative: Zacco Norway AS

(57) **Abstract**

The present invention relates to yoghurt products of good quality, both with regard to physical and sensory properties, comprising high amounts of proteins including high amounts of native whey proteins, and methods for manufacturing such yoghurt products.

## Description

### Field of the invention

The present invention relates to yoghurt products comprising high amounts of proteins including high amounts of native whey proteins, and methods for manufacturing such yoghurt products.

### Background of the invention

Yoghurt products are of high economic importance to dairy industry worldwide, and constantly new yoghurt varieties and concepts are presented to consumers. High protein yoghurts have been capturing more and more consumers over the latest years. Consumers' increased consciousness about health benefits of dairy proteins, and increasing amount of scientific documentation claiming health promotional effect of protein intake, bring along expanded market opportunities.

The main proteins of dairy products are casein and whey proteins. Approximately 20 % of the proteins in cow's milk are whey proteins and 80 % are caseins.

Whey proteins have been reported to; stimulate muscle protein metabolism and accretion (Tipton et al., 2007), assist in long-term maintenance of body weight (Baer et al., 2011), reduce body weight gain (Pichon et al., 2008), lower systolic blood pressure and improve vascular function in overweight and obese individuals (Pal & Ellis, 2009), and be more satiating due to increased postprandial circulating levels of amino acids, and the hormones cholecystokinin and glucagon-like peptide 1 (Hall, Millward, Long, & Morgan, 2003; Lam, Moughan, Awati & Morton, 2009).

Furthermore, preliminary results suggest that amino acids from native whey protein concentrate fractionated directly from skim milk are better absorbed in blood than amino acids from microparticulated whey proteins, low-fat milk, hydrolyzed whey proteins or whey protein concentrate (WPC 80) (Laahne, 2013).

Almaas et al. (2006) studied in vitro digestion of bovine milk by human proteolytic enzymes. They reported a faster digestion of unheated milk than heated milk. The result was explained by the probable structural changes in proteins caused by heat denaturation and aggregation of whey proteins.

Therefore, yoghurts with a high amount of whey proteins, particularly in native form, are desirable.

However, in yoghurt technology denaturation of whey proteins, and their consequently covalent association to casein micelles, is regarded as one of the premises to obtain a good yoghurt structure (Lucey & Singh, 1998; Robinson, Lucey & Tamine, 2006). Conventional heat treatment, 95 °C for 5 minutes or 80 °C for 30 minutes, give close to 100 % denaturation of β-lactoglobulin (Dannenberg & Kessler, 1987) and 75 % denaturation of α-lactalbumin (Anema, 2001).

Another important factor in yoghurt manufacture is the increase of total solids content to avoid a too weak yoghurt gel. This can be obtained by adding milk powder or by concentrating the milk by evaporation or membrane filtration (Robinson, Lucey & Tamime, 2006). From economical, nutritional and/or technological points of view skim milk powder can be replaced by whey protein concentrate powder.

Traditionally, yoghurt is prepared as follows:
- providing raw milk;
- separating the raw milk into a cream fraction and a skim milk fraction;
- optionally, standardizing the skim milk fraction to desired level of fat content;
- mixing the skim milk fraction which may have been fat standardized, with a milk powder and thereby obtain a composition with increased dry matter;
- subjecting the composition with increased dry matter to homogenization and thereby obtain a homogenized composition with increased dry matter;
- subjecting the composition with increased dry matter to heat treatment for a period of 5 minutes at 95 °C or for a period of 30 minutes at 80 °C and thereby obtain a heat treated homogenized composition with increased dry matter; and
- adding a starter culture to the heat treated homogenized composition with increased dry matter and thereby obtaining a fermented mixture.

The yoghurt product obtained by the traditional method above typically comprises:
- content of solids-non fat from 12 to 18 g/mL;
- whey protein:casein ratio of 20:80;
- 90-100% of the β-lactoglobulins in denaturated form;
- 60-90% of the α-lactoglobulins in denaturated form.

International patent application no. WO 2012/110705 discloses a whey protein product having a ratio of whey protein to casein in the range from about 25:75 to about less than 50:50, a total protein content of at least 20% on dry matter basis, and a protein content of about 2.5 to about 8% by weight, based on the weight of the product. A method of producing the said whey protein product, using microfiltration and ultrafiltration, is described. It is suggested that the whey protein product may be used in the preparation of sour milk products like yoghurt. However, nothing is mentioned about the process conditions for producing the sour milk products. Consequently, a person skilled in the art will assume that traditional manufacturing methods and conditions should be used.

Patocka, Cervenkova, Narine & Jelen (2006) and Guggisberg, Eberhard & Albrecht (2007) studied the effect of adding whey proteins to yoghurt milk after heat treatment to retain the whey proteins in their undenaturated and native state. When whey proteins were added to heat treated yoghurt milk before fermentation a reduction in storage modulus of the yoghurts was observed (Patocka, Cervenkova, Narine & Jelen, 2006; Guggisberg, Eberhard & Albrecht, 2007). As the whey proteins were added after fermentation a rapid breakdown of yoghurt gel was observed, resulting in two separate phases comprising fluid whey and a coagulated protein mass (Patocka, Cervenkova, Narine & Jelen, 2006).

It is a challenge to find a way to produce yoghurts of good quality comprising considerable amounts of native whey proteins.

It is now surprisingly found that by modifying the temperature and optionally the time period of the heat treatment step, high quality yoghurt comprising high amounts of native whey proteins, is obtained.

### Summary of the invention

It is a main object of the present invention to provide yoghurt of good quality, both with regard to physical and sensory properties, comprising high amounts of native whey proteins, i.e. from 4 to 70 mg/mL.

Another object of the present invention is to provide yoghurt of good quality wherein the whey protein:casein ratio is higher in whey protein and lower in casein compared to traditional yoghurts.

Still another object of the present invention is to provide a method for manufacturing the yoghurts mentioned above.

These and other objects are obtained by the yoghurt and method as defined in the accompanying claims.

### Definitions

As used herein, the terms "yoghurt" and "yoghurt product" mean concentrated fermented milk (ref. Codex standard for fermented milks). Concentrated fermented milk is fermented milk where the protein content has been increased prior to fermentation to minimum 5.6 %. That is, products such as ymer, ylette, labneh and kefir which in addition to yoghurt are included in the definition of the above-mentioned concentrated fermented milk, are within the scope of the terms "yoghurt" and "yoghurt products" as used herein. The different concentrated fermented milks are characterized by the starter culture used for fermentation.

As used herein, the term "protein" means crude protein (CP). Crude protein is total nitrogen multiplied by 6.38, not adjusted for the non-protein nitrogen (NPN). NPN and CP are analyzed by standardized IDF methods (Kjeldahl), IDF 2001 and IDF 2014, respectively.

As used herein, true protein (TP) is calculated by subtracting non-protein nitrogen (NPN) from true nitrogen (TN), and multiplying with a factor of 6.38. NPN and TN are analyzed by standardized IDF methods (Kjeldahl), IDF 2001 and IDF 2014, respectively.

As used herein, casein (C) is calculated by subtracting NPN and non-casein nitrogen (NCN) from TN, and multiplying with a factor of 6.38. NCN is analyzed by a standardized IDF method (Kjeldahl), IDF 2004.

As used herein, the term "whey protein" includes denatured and undenatured whey proteins. Undenatured whey protein is also referred to as native whey protein.

Native whey proteins consist mainly of α-lactalbumin, β-lactoglobulin A and β-lactoglobulin B. Native whey protein is directly extracted/removed from milk (preferably unpasteurized) with the use of microfiltration or ultrafiltration. Native whey protein has not been subjected to the cheese making process, and is therefore free from remnants of rennet, lactic acid bacteria, bacteriophages, somatic cells, cheese fines, and glycomacropeptide. Native whey has a neutral pH and the whey proteins are undenatured as long as the milk has not been exposed to severe heat treatment or pressure. As used herein, native whey protein (NWP) was calculated by subtracting NPN from NCN, and multiplying with a factor of 6.38. NPN and NCN are analyzed by standardized IDF methods (Kjeldahl), IDF 2001 and IDF 2004, respectively. Native α-lactalbumin, and native β-lactoglobulin A and B were quantitatively determined according to the method described by Beyer (1990).

Denatured whey protein is whey protein where the native protein molecule conformation has been changed irreversible. The native protein molecule conformation of the main whey proteins α-lactalbumin and β-lactoglobulin is globular.

As used herein, the term "native whey protein" is equivalent to the term "undenaturated whey protein".

As defined herein milk is any type of milk produced by any milk animals. Most common milk animals are cattle or cows, buffaloes, goats, sheep and camels. Less common milk animals, but included herein, are yaks, horses, reindeers and donkeys.

The major proteins in milk are whey protein and casein. In milk from cattle the ratio of whey protein to casein is typically 20 to 80.

### Detailed description of the invention

The present invention provides a yoghurt comprising a content of protein in the range from 5.6 % to 20 % (w/w), a content of native whey protein in the range from 4 to 70 mg/mL, and a weight ratio of whey protein (i.e. native and denatured whey proteins) to casein in a range from 22:78 to 50:50 (w/w).

In a preferred embodiment of the invention, the protein content is in the range from 5.6 % to 18 % (w/w). In a more preferred embodiment of the invention, the protein content is in the range from 5.6 % to 15 % (w/w). In another preferred embodiment of the invention, the protein content is in the range from 6 % to 18 % (w/w). In a more preferred embodiment of the invention, the protein content is in the range from 6.5 % to 18 % (w/w). In another preferred embodiment of the invention, the protein content is in the range from 7 % to 17 % (w/w). In still another preferred embodiment of the invention, the protein content is in the range from 7 % to 15 % (w/w). In a more preferred embodiment of the invention, the protein content is in the range from 7 % to 13 % (w/w). In another preferred embodiment of the invention, the protein content is in the range from 7 % to 12 % (w/w). In yet another preferred embodiment of the invention, the protein content is in the range from 8 % to 12 % (w/w), and in a most preferred embodiment of the invention, the protein content is in the range from 8 % to 11 % (w/w).

In a preferred embodiment of the invention, the content of native whey protein of the yoghurt is in the range from 4 mg/mL to 65 mg/mL. In another preferred embodiment of the invention, the content of native whey protein of the yoghurt is in the range from 4 mg/mL to 55 mg/mL. In a more preferred embodiment of the invention, the content of native whey protein of the yoghurt is in the range from 4.5 mg/mL to 65 mg/mL. In another preferred embodiment of the invention, the content of native whey protein of the yoghurt is in the range from 5 mg/mL to 60 mg/mL. In still another preferred embodiment of the invention, the content of native whey protein of the yoghurt is in the range from 5 mg/mL to 55 mg/mL. In a more preferred embodiment of the invention, the content of native whey protein of the yoghurt is in the range from 5 mg/mL to 45 mg/mL. In yet a preferred embodiment of the invention, the content of native whey protein of the yoghurt is in the range from 5 mg/mL to 40 mg/mL. In another preferred embodiment of the invention, the content of native whey protein of the yoghurt is in the range from 5.5 mg/mL to 40 mg/mL. In still another preferred embodiment of the invention, the content of native whey protein of the yoghurt is in the range from 6 mg/mL to 40 mg/mL. In a more preferred embodiment of the invention, the content of native whey protein of the yoghurt is in the range from 6 mg/mL to 30 mg/mL. In yet a preferred embodiment of the invention, the content of native whey protein of the yoghurt is in the range from 8 mg/mL to 40 mg/mL. In another preferred embodiment of the invention, the content of native whey protein of the yoghurt is in the range from 8 mg/mL to 30 mg/mL. In a more preferred embodiment of the invention, the content of native whey protein of the yoghurt is in the range from 10 mg/mL to 40 mg/mL, and in a most preferred embodiment of the invention, the content of native whey protein of the yoghurt is in the range from 10 mg/mL to 30 mg/mL.

In a preferred embodiment of the invention, the whey protein: casein weight ratio of the yoghurt is from 25:75 to 45:55 (w/w), more preferable from 25:75 to 40:60 (w/w), and most preferable from 25:75 to 35:65 (w/w).

In another preferred embodiment of the invention, 30 to 70 % of the total content of whey protein of the yoghurt is in native state.

Furthermore, the present invention provides a method for manufacturing a yoghurt as defined above, comprising the steps of:
a) providing raw milk;
b) separating the raw milk into a cream fraction and a skim milk fraction;
c) subjecting the skim milk fraction to microfiltration (MF) adapted to separate casein from whey protein and thereby obtaining a casein-rich fraction and a fraction of native whey protein;
d) providing a native whey protein concentrate by subjecting the fraction of native whey protein to ultrafiltration (UF) adapted to separate native whey protein from water;
e) mixing the casein-rich fraction and the native whey protein concentrate and thereby obtaining a mixture of casein and native whey protein wherein the whey protein to casein ratio is increased compared to the ratio of whey protein to casein in the raw milk;
f) subjecting the mixture of casein and native whey protein to heat treatment and thereby obtaining a heat treated mixture of casein and whey protein;
g) adding a starter culture to the heat treated mixture of casein and whey protein to provide a fermented mixture; and
h) cooling the fermented mixture;
   wherein:
   - the mixture of casein and native whey protein obtained in step e) has a weight ratio of whey protein to casein in a range from 22:78 to 50:50; and
   - the heat treatment of step f) is carried out by heating the mixture of casein and native whey protein at a temperature and for a time period sufficient to obtain denaturation of 30 to 70 % of the native whey protein of the mixture.

The raw milk provided in step a) is optionally unpasteurized.

The casein-rich fraction obtained in step c) is the retentate resulting from microfiltration. Herein, it is also mentioned MF retentate or MFR.

The fraction of native whey protein obtained in step c) is the permeate resulting from microfiltration. This fraction is also mentioned MF permeate or MFP herein.

The native whey protein concentrate obtained in step d) is the retentate resulting from ultrafiltration of the microfiltration permeate obtained in step c). Herein, it is also mentioned UF retentate or UFR.

In a preferred embodiment of the method according to the invention, the skim milk fraction obtained in step b) is subjected to microfiltration or bactofugation adapted to separate microorganisms and spores from the skim milk fraction and thereby obtain a microorganism-rich fraction and a partly sterilized skim milk fraction before subjecting the partly sterilized skim milk fraction to the microfiltration of step c).

In another preferred embodiment of the method according to the invention, the caseinrich fraction obtained in step c) has been concentrated to a volume concentration factor (CF) in the range from 1.5 to 6, preferably 1.5 to 4.5, and more preferable 1.5 to 3.5.

The microfiltration in step c) is carried out by using membranes with pore size from 0.05 µm to 0.2 µm.

The ultrafiltration in step d) is carried out by using membranes with cut-off from 1 kDa to 35 kDa.

According to one embodiment of the method of the invention, the casein-rich fraction obtained in step c) is pasteurized before subjected to mixing with the whey protein concentrate in step e).

According to another embodiment of the method of the invention, the mixture of casein and native whey protein obtained in step e) is fat standardized with addition of cream before heat treatment in step f).

According to yet another embodiment of the method of the invention, the mixture of casein and native whey protein obtained in step e) is subjected to homogenization and thereby obtaining a homogenized casein/ native whey protein mixture to be heat treated in step f).

The starter culture added in step g) to provide fermentation, is a yoghurt culture comprising *Streptococcus* subsp. *thermophilus* and *Lactobacillars delbrueckii* subsp. *bulgaricus*. Other suitable starter cultures can be used to obtain other characteristic concentrated fermented milk products, e.g. ymer or kefir (ref. Codex standard for fermented milks).

The starter culture is added in conventional amounts.

The fermentation in step g) is carried out in a time sufficient to obtain proper acidification. That is, to obtain pH about 4.6 or lower, e.g. pH 4.5.

According to one embodiment of the method of the invention, the fermented mixture obtained in step g) is stirred before cooling in step h).

The ratio of protein to lactose of the mixture that is heat treated in step f) affects the temperature/time combination at heat treatment needed to obtain denaturation of 30 to 70 % of the native whey protein in the mixture. Lactose protects the native whey proteins from being denaturated by heat. That is, if the content of lactose increases in relation to the content of native whey proteins, a higher temperature and/or time will be needed to achieve the desired denaturation. A higher lactose content results in a lower degree of denaturation, explained by the hydration effect of the lactose to the protein molecule (Spiegel (1999)).

In a preferred embodiment of the invention, the heat treatment of step f) is carried out by heating the mixture of casein and native whey protein at a temperature of 75 °C for a time period of 5 minutes, or another combination of temperature and time period providing equivalent denaturation degree as obtained by the temperature 75°C for 5 minutes.

In another preferred embodiment of the invention, the heat treatment of step f) is carried out by heating the mixture of casein and native whey protein at a temperature of 70°C for 15 minutes. In still another preferred embodiment of the invention, the heat treatment of step f) is carried out by heating the mixture of casein and native whey protein at a temperature of 80°C for 1 minute. In a further preferred embodiment of the invention, the heat treatment of step f) is carried out by heating the mixture of casein and native whey protein at a temperature of 85°C for 30 seconds. In another preferred embodiment of the invention, the heat treatment of step f) is carried out by heating the mixture of casein and native whey protein at a temperature of 90°C for 10 seconds. In yet another preferred embodiment of the invention, the heat treatment of step f) is carried out by heating the mixture of casein and native whey protein at a temperature of 95°C for 6 seconds. In another preferred embodiment of the invention, the heat treatment of step f) is carried out by heating the mixture of casein and native whey protein at a temperature of 100°C for 3 seconds, and in another preferred embodiment of the invention, at a temperature of 110°C for 2 seconds.

Typically, a short heating time is applicable when the temperature is high and vice versa.

Thus, a person known in the art will realize that other temperatures and time periods than those indicated in the preferred embodiment above, will be useful.

The method of present invention prepares a casein rich fraction (retentate) and a native whey protein fraction (permeate) by microfiltration of skim milk, and further concentrating the native whey protein fraction by ultrafiltration to a concentrate of native whey protein. This gives the option to mix a casein rich fraction and a concentrate of native whey protein in different ratios to obtain yoghurt with increased total protein content as well as increased whey protein content compared to the ratio of whey proteins and casein in regular raw milk. In addition, a modified temperature-time combination during heat treatment allows a considerable amount of the whey proteins to be retained in their native state.

In another aspect the present invention provides an alternative method for manufacturing a yoghurt as defined above, comprising the steps of:
a) providing raw milk;
b) separating the raw milk into a cream fraction and a skim milk fraction;
c) subjecting the skim milk fraction to ultrafiltration (UF) adapted to obtain concentrated milk rich in casein and whey protein in the UF retentate;
d) providing a powder or concentrate of native whey protein;
e) mixing the protein-rich UF retentate obtained in step c) and the native whey protein powder or concentrate from step d) and thereby obtaining a mixture of casein and native whey protein;
f) subjecting the mixture of casein and native whey protein to heat treatment and thereby obtaining a heat treated mixture of casein and whey protein;
g) adding a starter culture to the heat treated mixture of casein and whey protein to provide fermentation of the mixture; and
h) cooling the fermented mixture;
   wherein:
   - the mixture of casein and native whey protein obtained in step e) has a weight ratio of whey protein to casein in a range from 22:78 to 50:50; and
   - the heat treatment of step f) is carried out by heating the mixture of casein and native whey protein at a temperature and for a time period sufficient to obtain denaturation of 30 to 70 % of the native whey protein of the mixture.

In still another aspect the present invention provides a further alternative method for manufacturing a yoghurt as defined above, comprising the steps of:
a) providing raw milk;
b) separating the raw milk into a cream fraction and a skim milk fraction;
c) subjecting the skim milk fraction to microfiltration (MF) adapted to separate casein from whey protein and thereby obtaining a casein-rich fraction and a fraction of native whey protein;
d) providing a powder of native whey protein;
e) mixing the casein-rich fraction and the powder of native whey protein and thereby obtaining a mixture of casein and native whey protein;
f) subjecting the mixture of casein and native whey protein to heat treatment and thereby obtaining a heat treated mixture of casein and whey protein;
g) adding a starter culture to the heat treated mixture of casein and whey protein to provide fermentation of the mixture; and
h) cooling the fermented mixture;
   wherein:
   - the mixture of casein and native whey protein obtained in step e) has a weight ratio of whey protein to casein in a range from 22:78 to 50:50; and
   - the heat treatment of step f) is carried out by heating the mixture of casein and native whey protein at a temperature and for a time period sufficient to obtain denaturation of 30 to 70 % of the native whey protein of the mixture.

In yet another aspect the present invention provides another further alternative method for manufacturing a yoghurt as defined above, comprising the steps of:
a) providing raw milk;
b) separating the raw milk into a cream fraction and a skim milk fraction;
c) subjecting the skim milk fraction to microfiltration (MF) adapted to separate casein from whey protein and thereby obtaining a casein-rich fraction and a fraction of native whey protein;
d) providing a powder of native whey protein which is added to the fraction of native whey protein obtained in step c);
e) mixing the casein-rich fraction obtained in step c) and the native whey protein concentrate obtained in step d) and thereby obtaining a mixture of casein and native whey protein;
f) subjecting the mixture of casein and native whey protein to heat treatment and thereby obtaining a heat treated mixture of casein and whey protein;
g) adding a starter culture to the heat treated mixture of casein and whey protein to provide fermentation of the mixture; and
h) cooling the fermented mixture;
   wherein:
   - the mixture of casein and native whey protein obtained in step e) has a weight ratio of whey protein to casein in a range from 22:78 to 50:50; and
   - the heat treatment of step f) is carried out by heating the mixture of casein and native whey protein at a temperature and for a time period sufficient to obtain denaturation of 30 to 70 % of the native whey protein of the mixture.

The raw milk provided in step a) of the alternative methods is optionally unpasteurized.

According to one embodiment of the alternative methods, the casein-rich fraction obtained in step c) is pasteurized before subjected to mixing with the native whey protein in step e).

According to another embodiment of the alternative methods of the invention, the mixture of casein and native whey protein obtained in step e) is fat standardized with addition of cream before heat treatment in step f).

According to yet another embodiment of the alternative methods of the invention, the mixture of casein and native whey protein obtained in step e) is subjected to homogenization and thereby obtaining a homogenized casein/native whey protein mixture to be heat treated in step f).

The starter culture added in step g) to provide fermentation, is a yoghurt culture comprising *Streptococcus* subsp. *thermophilus* and *Lactobacillus delbrueckii* subsp. *bulgaricus*. Other suitable starter cultures can be used to obtain other characteristic concentrated fermented milk products, e.g. ymer or kefir (ref. Codex standard for fermented milks).

The starter culture is added in conventional amounts.

The fermentation in step g) is carried out in a time sufficient to obtain proper acidification. That is, to obtain pH about 4.6 or lower, e.g. pH 4.5.

According to one embodiment of the alternative methods of the invention, the fermented mixture obtained in step g) is stirred before cooling in step h).

In a preferred embodiment of the alternative methods of the invention, the heat treatment of step f) is carried out by heating the mixture of casein and native whey protein at a temperature of 75 °C for a time period of 5 minutes, or another combination of temperature and time period providing equivalent denaturation degree as obtained by the temperature 75°C for 5 minutes.

In another preferred embodiment of the alternative methods of the invention, the heat treatment of step f) is carried out by heating the mixture of casein and native whey protein at a temperature of 70°C for 15 minutes. In still another preferred embodiment of the alternative methods of the invention, the temperature is 80°C for 1 minute. In a further preferred embodiment of the alternative methods of the invention, the temperature is 85°C for 30 seconds. In another preferred embodiment of the alternative methods of the invention, the temperature is 90°C for 10 seconds. In yet another preferred embodiment of the alternative methods of the invention, the temperature is 95°C for 6 seconds. In another preferred embodiment of the alternative methods of the invention, the temperature of 100°C for 3 seconds, and in another preferred embodiment of the alternative methods of the invention, the temperature is 110oC for 2 seconds.

Typically, a short heating time is applicable when the temperature is high and vice versa, and a person known in the art will realize that other temperatures and time periods than those indicated in the preferred embodiment above, will be useful.

All the methods provided by the present invention renders it possible to manufacture qualitatively acceptable yoghurt containing considerably amounts of native whey proteins (α-lactalbumin, β-lactoglobulin B, and β-lactoglobulin).

In the examples below it is shown that yoghurts of 8 % protein, a whey protein to casein ratio from 25:75 to 35:65 and high amounts of native whey proteins (i.e. α-lactalbumin, 2.13-2.61 mg mL⁻¹; β-lactoglobulin B, 5.48-6.39 mg mL⁻¹; β-lactoglobulin A, 5.40-6.09 mg mL⁻¹) have been prepared by mixing concentrates of casein and native whey protein and modifying the heat treatment of yoghurt milk.

It is shown in the examples below that addition of native whey protein concentrate positively influence sensory attributes when added in low (NWP:C-ratio 23.7:76.3) or medium levels (NWP:C-ratio 34.3:65.7).

Furthermore, the examples of the present invention show that qualitatively acceptable high protein yoghurt (i.e. 8% protein) containing native whey proteins (α-lactalbumin, 2.13-2.61 mg mL⁻¹; β-lactoglobulin B, 5.48-6.39 mg mL⁻¹; β-lactoglobulin A, 5.40-6.09 mg mL⁻¹) can be produced by addition of low (whey:casein ratio 25:75) or medium (whey:casein ratio 35:65) levels of native whey protein concentrate in combination with a reduction in temperature from 95 °C for 5 minutes to 75 °C for 5 minutes.

The present invention provides yoghurt products with high amounts of native whey protein having positive nutritional and health effects.

Furthermore, the present invention provides methods of preparing nutritious and healthy yoghurt products without producing acid whey which is an unwanted by-product of low value and difficult to dispose.

### Detailed description of the drawings

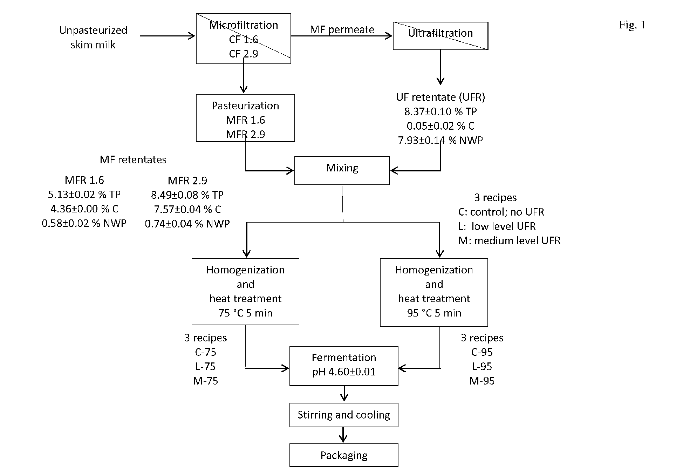

Fig. 1 shows a flow chart illustrating the production of yoghurt based on microfiltration and ultrafiltration fractions from unpasteurized skim milk according to the present invention.

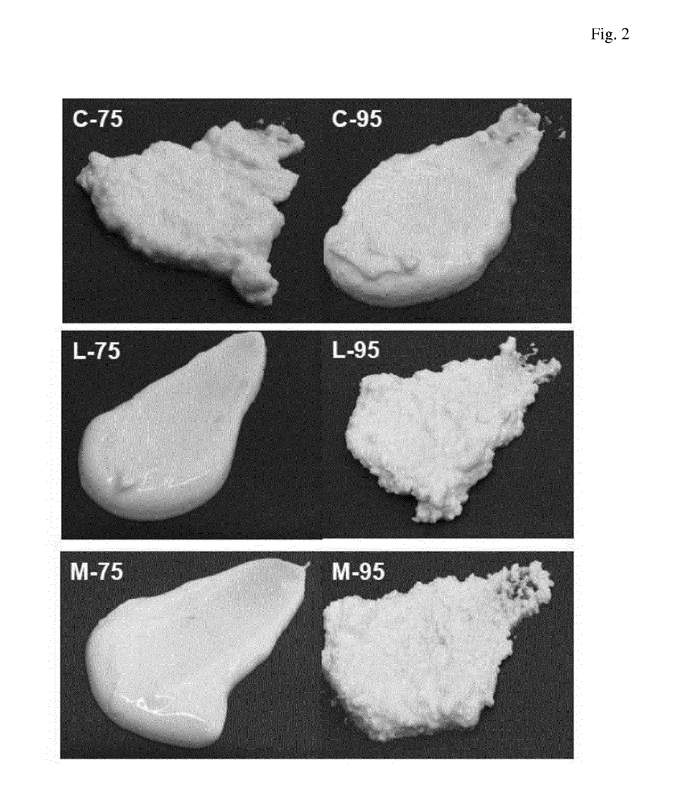

Fig. 2 shows pictures of stirred yoghurts with no addition of UFR and heat treated at 75 °C for 5 minutes (C-75), with no addition of UFR and heat treated at 95 °C for 5 minutes (C-95), added low (L) level of UFR and heat treated at 75 °C for 5 minutes (L-75), added low (L) level of UFR and heat treated at 95 °C for 5 minutes (L-95), added medium (M) level of UFR and heat treated at 75 °C for 5 minutes (M-75), and added medium (M) level of UFR and heat treated at 95 °C for 5 minutes (M-95).

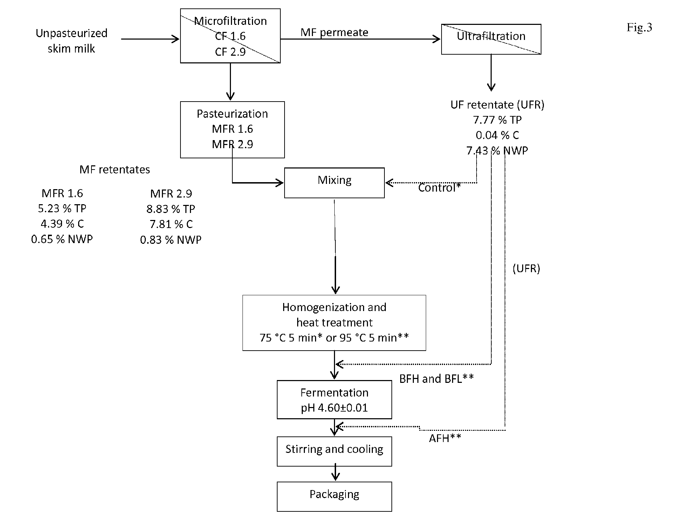

Fig. 3 shows a flow chart illustrating the production of yoghurt based on microfiltration and ultrafiltration fractions of unpasteurized skim milk wherein UFR is added after heat treatment according to Example 6 (reference example).

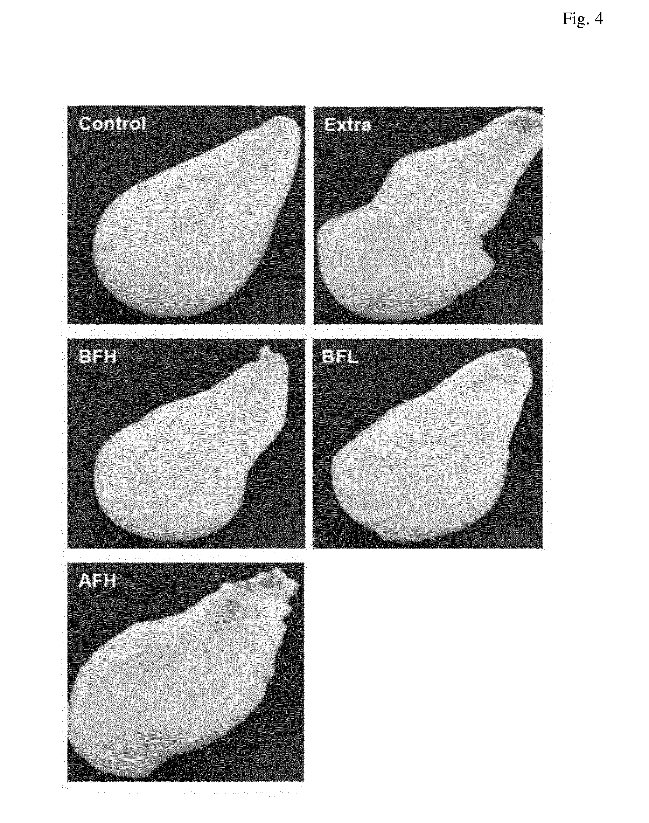

Fig. 4 shows pictures of stirred yoghurts with addition of UFR before heat treatment at 75 °C for 5 minutes and fermentation (Control), addition of UFR before heat treatment at 75 °C for 5 minutes and fermentation (Extra), added low level of UFR after heat treatment at 95 °C for 5 minutes but before fermentation (BFL), added high level of UFR after heat treatment at 95 °C for 5 minutes but before fermentation (BFH), added high level of UFR after heat treatment at 95 °C for 5 minutes and fermentation (AFH).

The invention is explained in more detail in the examples below. The examples are only meant to be illustrative and shall not be considered as limiting.

### Examples

### Example 1

Stirred and set yoghurts were produced using three whey protein:casein ratios (10:90, 25:75 or 35:65) and two heat treatment temperatures (75 or 95 °C for 5 minutes) leading to a total of six factor combinations. Two replication blocks gave a total of 12 yoghurt batches.

Cow's milk (Norwegian red cattle) was obtained from the university farm. The milk was separated (Westfalia separator AG, SA 1-01-175, Oelde, Germany) at 63 °C. Unpasteurized skim milk was temporary collected in a double-O vat (Landteknikk A/L, Trondheim, Norway) and kept at 50 ± 2 °C until microfiltration (MF) in an MF pilot plant (APV Anhydro AS, Silkeborg, Denmark). Microfiltration was performed at a uniform transmembrane pressure with a module containing seven ceramic membranes, each with pore size 0.14 µm and 0.303 m² filter area (INSIDE CéRAM™, TAMI Industries, Nyons, France). Filtration temperature varied between 55 and 58 °C with an average temperature of 56.5 °C. The permeate circulation was cooled to an average temperature of 51.7 °C using a separate cooling system according to the International patent WO 2011/115498 A1 (Hoffmann, 2011). Microfiltration retentates (MFR) with average volume concentration factors of 1.6 and 2.9 were produced. The MFRs were pasteurized (type A3-HRB, Alfa Laval, Nakskov, Denmark) at 72 °C for 15 seconds. The MF permeate was concentrated on an ultrafiltration (UF) pilot plant Alfa Laval UFS-4 (Alfa Laval, Nakskov, Denmark) containing a single spiral wound membrane (GR60PP-6338/48, Alfa Laval, Nakskov, Denmark) with 25 000 Da cut-off. Filtration temperature was kept between 45 and 50 °C with an average temperature of 47.8 °C. The ultrafiltration retentate (UFR) had an average volume concentration factor of approximately 18.8. The chemical composition of the pasteurized MFRs and UFR is shown in Table 1, while Fig. 1 gives a flow chart of the production of fractions and yoghurts. It should be noted that the terms "MFR 1.6" and MRF 2.9" in Table 1 and Fig. 1 indicate that the microfiltration retentates (MFR) has been concentrated with volume concentration factors (CF) 1.6 and 2.9, respectively.

**Table 1: Chemical composition (mean±SD from the mean, n=2) of pasteurized (72 °C 15 sec) microfiltration retentates; MFR 1.6 and MFR 2.9, and ultrafiltration retentate; UFR.**

| Components | MFR 1.6 | MFR 2.9 | UFR |
|---|---|---|---|
| Total solids (%) | 10.52±0.13 | 13.90±0.09 | 13.28±0.08 |
| CP¹ (%) | 5.32±0.02 | 8.66±0.09 | 8.77±0.09 |
| TP¹ (%) | 5.13±0.02 | 8.49±0.08 | 8.37±0.10 |
| C¹ (%) | 4.36±0.00 | 7.57±0.04 | 0.05±0.02 |
| NWP¹ (%) | 0.58±0.02 | 0.74±0.04 | 7.93±0.14 |
| NWP:C¹ (%/%) | 11.7:88.3 | 8.9:91.1 | 99.4:0.6 |
| Fat (%) | 0.22±0.01 | 0.47±0.18 | 0.11±0.04 |
| Lactose (mmol kg⁻¹) | 130.6±5.9 | 122.2±7.7 | 121.1±2.5 |
| Ash (%) | 0.90±0.01 | 1.14±0.07 | 0.58±0.11 |
| Calcium (g kg⁻¹) | 1.7±0.1 | 2.7±0.1 | 0.5±0.0 |
| Phosphorus (g kg⁻¹) | 1.3±0.0 | 2.0±0.1 | 0.5±0.0 |

| | | | |
|---|---|---|---|
| ²CP=crude protein; TP=true protein; C=casein; NWP=native whey protein. | | | |

MFR 1.6 and 2.9 and UFR were blended in suitable quantities in order to achieve mixtures with a true protein content of 8 % and native whey:casein ratios of: 10:90 (control, no addition of UFR (C)); 25:75 (low addition of UFR (L)); 35:65 (medium addition of UFR (M)). The chemical composition of the mixtures is presented in Table 2.

**Table 2: Chemical composition (mean±SD from the mean, n=2) of yoghurt mixtures. Denotations C, L and M refer to level of ultrafiltration retentate added; control (no addition); low; and medium respectively. Denotations 75 and 95 refer to heat treatment; 75 °C for 5 minutes; and 95 °C for 5 minutes respectively.**

| Components | C-75 | C-95 | L-75 | L-95 | M-75 | M-95 |
|---|---|---|---|---|---|---|
| Total solids¹ (%) | 13.49±0.04 | 13.40±0.12 | 13.50±0.23 | 13.56±0.32 | 13.30±0.16 | 13.60±0.39 |
| CP² (%) | 8.18±0.01 | 8.18±0.01 | 8.33±0.05 | 8.33±0.05 | 8.32±0.01 | 8.32±0.01 |
| TP² (%) | 8.02±0.04 | 8.02±0.04 | 8.09±0.07 | 8.09±0.07 | 8.02±0.02 | 8.02±0.02 |
| C² (%) | 7.10±0.00 | 7.10±0.00 | 6.00±0.09 | 6.00±0.09 | 5.08±0.01 | 5.08±0.01 |
| NWP² (%) | 0.75±0.06 | 0.75±0.06 | 1.86±0.01 | 1.86±0.01 | 2.65±0.02 | 2.65±0.02 |
| NWP:C² (%/%) | 9.6:90.4 | 9.6:90.4 | 23.7:76.3 | 23.7:76.3 | 34.3:65.7 | 34.3:65.7 |
| Native α-LA¹ (mg mL⁻1) | 0.77±0.03 | 0.28±0.06 | 2.13±0.03 | 0.21±0.00 | 2.61±0.09 | 0.16±0.02 |
| Native α-LA¹ (%) | 75.0±3.4 | 27.6±6.44 | 53.6±1.1 | 5.4±0.1 | 45.2±2.4 | 2.7±0.2 |
| Native P-LG B¹ (mg mL⁻1) | 1.51±0.15 | 0.01±0.01 | 5.48±0.61 | 0.05±0.01 | 6.39±0.16 | 0.06±0.01 |
| Native β-LG B¹ (%) | 48.4±6.4 | 0.5±0.34 | 42.3±5.76 | 0.4±0.1 | 34.4±1.4 | 0.3±0.0 |
| Native β-LG A¹ (mg mL⁻1) | 1.42±0.01 | 0.01±0.01 | 5.40±1.04 | 0.04±0.01 | 6.09±0.52 | 0.05±0.01 |
| Native β-LG A¹ (%) | 55.1±4.9 | 0.5±0.3 | 50.5±7.2 | 0.4±0.1 | 39.8±0.2 | 0.3±0.0 |
| Fat¹ (%) | 0.43±0.17 | 0.43±0.17 | 0.37±0.14 | 0.39±0.16 | 0.32±0.13 | 0.32±0.13 |
| Lactose (mmol kg⁻¹) | 118.0±3.3 | 118.7±1.9 | 119.5±3.6 | 124.7±5.1 | 122.8±5.1 | 118.9±4.9 |
| Ash¹ (%) | 1.07±0.04 | 1.04±0.02 | 1.04±0.01 | 1.05 ± 0.01 | 0.94 ± 0.04 | 0.99 ± 0.02 |
| Calcium¹ (g kg⁻¹) | 2.6±0.1 | 2.6±0.1 | 2.2±0.0 | 2.3±0.0 | 2.0±0.0 | 2.0±0.0 |
| Phosphorus¹ (g kg⁻¹) | 1.9±0.0 | 1.9±0.0 | 1.7±0.0 | 1.7±0.0 | 1.5±0.0 | 1.5±0.0 |

| | | | | | | |
|---|---|---|---|---|---|---|
| ¹Measured in mixtures after heat treatment. LA=lactalbumin, LG=lactoglobulin. Native α-LA (%) is the percentage share of native whey protein left in mixture after heat treatment compared to the amount of native whey protein in mixture before heat treatment. ²Measured in mixture before heat treatment. CP=crude protein; TP=true protein; C=casein; NWP=native whey protein. | | | | | | |

In a randomized order, the mixtures were homogenized (Rannie Machine Works Ltd., Albertslund, Denmark) at 180 bar at 55 °C and subsequently heat treated at 75 or 95 °C for 5 minutes in a double-jacketed 5 L heating tank connected to steam and cold water (Norwegian University of Life Sciences, Ås, Norway). The homogenized and heat treated mixtures were precooled and filled at 40-45 °C on sterilized 5 L stainless steel cans with lid and stirrer and tempered to 43 °C in a water bath equipped with a thermostat control. The mixtures were inoculated with 0.02 % (w/w) yoghurt culture (F-DVS YC-183, Chr. Hansen, Hørsholm, Denmark) consisting of *Streptococcus thermophilus* and *Lactobacillus delbrueckii* subsp. *bulgaricus*. At pH 4.60 ± 0.01 yoghurts in the 5 L cans were subjected to stirring for 1 minute and subsequently cooled in an ice water bath. Every tenth minute, yoghurts placed in ice water bath were stirred for 15 seconds until a yoghurt temperature of 19 ± 2 °C was reached after approximately 40 minutes. Yoghurts were then filled in suitable smaller containers (70 mL or 300 mL plastic cups with lids) and placed in a cold room (4 °C) until analyzing.

### Example 2

The stirred yoghurts prepared in Example 1 were sensory profiled with regard to appearance and consistency. Intensity of appearance attributes (coarse; granular; shiny; ropy; thickness) and consistency attributes (viscosity; mealy; gritty; smooth) of stirred yoghurts heat treated at 75 °C for 5 minutes and 95 °C for 5 minutes were analyzed on a continuous scale from 1 to 9, see Table 3. Denotations C, L and M refer to level of ultrafiltration retentate added; control (no addition); low; and medium respectively. Increased temperature (95 °C for 5 minutes) at heat treatment of yoghurts added UFR (L or M) resulted in higher intensity for the appearance related attributes coarse, granular and thickness. The addition of UFR only seemed to increase the intensity of these attributes when the heat treatment was set to 75 °C for 5 minutes. Yoghurts added low (L) or medium (M) levels of UFR and heat treated at 75 °C for 5 minutes were shinier than the corresponding yoghurts heat treated at 95 °C for 5 minutes. Lower heat treatment of yoghurts added low or medium levels of UFR gave smoother consistency than heat treatment at 95 °C for 5 minutes. Heat treatment and addition of UFR did not affect the attributes ropy and gritty. Mealy consistency was reduced by the addition of UFR (L or M) compared to control.

**Table 3**

| Yoghurt | Coarse | Granular | Shiny | Ropy | Thickness | Viscosity | Mealy | Gritty | Smooth |
|---|---|---|---|---|---|---|---|---|---|
| C-75 | 6.4 | 7.4 | 2.5 | 1.6 | 7.3 | 4.4 | 6.2 | 2.2 | 1.4 |
| C-95 | 3.5 | 5.2 | 2.8 | 1.8 | 6.5 | 4.8 | 6.4 | 1.8 | 2.0 |
| L-75 | 1.7 | 2.2 | 6.6 | 2.5 | 5.3 | 5.5 | 3.1 | 1.4 | 5.4 |
| L-95 | 7.6 | 7.3 | 2.9 | 1.6 | 7.3 | 4.4 | 4.5 | 1.7 | 1.8 |
| M-75 | 2.4 | 3.3 | 5.7 | 2.8 | 5.8 | 5.5 | 4.0 | 1.4 | 4.7 |
| M-95 | 8.1 | 7.5 | 2.7 | 1.3 | 7.3 | 4.1 | 3.2 | 1.6 | 1.5 |

### Example 3

The yoghurts prepared in Example 1 were sensory profiled with regard to flavor. Intensity of flavor attributes (yoghurt flavor; acid; bitter; off-flavor; whey; oxidized) of stirred yoghurts heat treated at 75 °C for 5 minutes and 95 °C for 5 minutes; was evaluated on a continuous scale from 1 to 9, see Table 4. Denotations C, L, and M refer to level of ultrafiltration retentate added; control (no addition); low; and medium respectively.

The flavor attributes; yoghurt flavor, acid, bitter and off-flavor, were scarcely affected by the addition of UFR and heat treatment. Oxidized flavor or whey flavor were absent in the yoghurts.

**Table 4**

| Yoghurt | Yoghurt | Acid | Bitter | Off-flavor | Whey | Oxidized |
|---|---|---|---|---|---|---|
| C-75 | 3.3 | 4.5 | 1.7 | 1.4 | 1.1 | 1.1 |
| C-95 | 3.5 | 4.5 | 2.1 | 1.3 | 1.0 | 1.0 |
| L-75 | 3.9 | 4.9 | 1.6 | 2.1 | 1.1 | 1.1 |
| L-95 | 3.5 | 4.8 | 1.4 | 1.4 | 1.1 | 1.1 |
| M-75 | 4.1 | 4.9 | 1.4 | 1.9 | 1.0 | 1.0 |
| M-95 | 3.3 | 4.4 | 1.2 | 1.3 | 1.0 | 1.0 |

### Example 4

The yoghurts prepared in Example 1 were studied with regard to particle size distribution.

Particle size distribution of yoghurt samples heat treated at 75 °C for 5 minutes and 95 °C for 5 minutes was measured with the use of Mastersizer 3000; D₅₀ represents the particle size (µm) at which 50 % of the particles in the sample is smaller and 50 % is larger, see Table 5. Denotations C, L and M refer to level of ultrafiltration retentate added; control (no addition); low; and medium respectively.

The smallest particle size distribution appeared in yoghurts added UFR (L or M) and heat treated at 75 °C for 5 minutes. The particle size of yoghurts heat treated at 95 °C for 5 minutes increased with increasing addition of UFR, leading to largest particles in yoghurt with the highest addition of UFR. For the control yoghurt (no addition of UFR) heat treatment at 95 °C for 5 minutes gave smaller particles than 75 °C for 5 minutes.

**Table 5**

| Yoghurt | D₅₀ |
|---|---|
| C-75 | 265,5 |
| C-95 | 121,8 |
| L-75 | 35,4 |
| L-95 | 237,1 |
| M-75 | 39,4 |
| M-95 | 696,8 |

### Example 5

Qualitative evaluation of the yoghurts prepared in Example 1 was performed. Appearance, odor/flavor and consistency were evaluated on a scale from 1 to 5. The mean intensity of the yoghurts added low (L) and medium (M) levels of UFR and heat treated at 75 °C were above 3.6, which indicates that the quality is acceptable.

Fig. 2 shows pictures of the yoghurts indicating the superior appearance attributes of the yoghurts added low (L) and medium (M) levels of UFR and heat treated at 75 °C for 5 minutes compared to the corresponding yoghurts heat treated at 95 °C for 5 minutes and yoghurts not added UFR and treated at 75 and 95 °C.

### Example 6 (reference example)

Microfiltration retentates (MFR 1.6 and MFR 2.9) were produced by microfiltration (0.14 µm) of unpasteurized skim milk with volume concentration factors (CF) 1.6 and 2.9 according to the process of Example 1. The microfiltration permeate was ultrafiltered (25 kDa) to an ultrafiltration retentate (UFR) according to the process of Example 1.
The chemical composition of the pasteurized MFRs and UFR is shown in Table 6, while Fig. 3 gives a flow chart of the production of fractions and yoghurts. The terms "MFR 1.6" and "MRF 2.9" indicate that the microfiltration retentates (MFR) has been concentrated with volume concentration factors (CF) 1.6 and 2.9, respectively.

**Table 6: Chemical composition of pasteurized (72 °C 15 sec) microfiltration retentates; MFR 1.6 and MFR 2.9, and ultrafiltration retentate; UFR.**

| Components | MFR 1.6 | MFR 2.9 | UFR |
|---|---|---|---|
| Total solids (%) | 10.50 | 14.07 | 12.64 |
| CP¹ (%) | 5.42 | 9.01 | 8.09 |
| TP¹ (%) | 5.23 | 8.83 | 7.77 |
| C¹ (%) | 4.39 | 7.81 | 0.04 |
| NWP¹ (%) | 0.65 | 0.83 | 7.43 |
| NWP:C¹ (%/%) | 12.9:87.1 | 9.6:90.4 | 99.4:0.6 |
| Fat (%) | 0.22 | 0.34 | 0.06 |
| Lactose (mmol kg⁻¹) | 145.7 | 137.5 | 148.0 |
| Ash (%) | 0.87 | 1.19 | 0.58 |

| | | | |
|---|---|---|---|
| ² CP=crude protein; TP=true protein; C=casein; NWP=native whey protein. | | | |

A control mixture, representing a yoghurt sample prepared according to the present invention, was made by blending UFR with the MFRs to a protein content of about 8 % and whey protein:casein ratio 30:70. The control mixture was homogenized and heat treated at 75 °C for 5 minutes, fermented to a pH of 4.60, stirred and cooled. Mixtures named before fermentation high (BFH) and before fermentation low (BFL) were made by homogenizing and heat treating mixtures of MFRs at a heat treatment temperature of 95 °C for 5 minutes. High or low amount of UFR was added to the heat treated mixtures to a whey protein:casein ratio of 30:70 or 20:80 respectively. Subsequently the mixtures were fermented to pH 4.60, stirred and cooled. A mixture named after fermentation high (AFH) was made in the same way as BFH, but instead of adding the UFR to the mixture before fermentation, it was added after fermentation but before stirring and cooling. The whey protein:casein ratio in AFH was theoretically 30:70. The chemical composition of the mixtures is presented in Table 7.

**Table 7: Chemical composition of yoghurt mixtures. Denotations 75 and 95 refer to heat treatment; 75 °C for 5 minutes; and 95 °C for 5 minutes respectively.**

| Components | Control-75 | BFH-95 | BFL-95 | AFH-95 |
|---|---|---|---|---|
| Total solids¹ (%) | 13.24 | 13.37 | 13.43 | 13.48³ |
| CP² (%) | 8.33 | 8.43³ | 8.43³ | 8.43³ |
| TP² (%) | 8.07 | 8.23³ | 8.23³ | 8.23³ |
| C² (%) | 5.47 | 7.23³ | 7.23³ | 7.23³ |
| NWP² (%) | 2.35 | 0.81³ | 0.81³ | 0.81³ |
| NWP:C² (%/%) | 30.1:69.9 | 10.0:90.0³ | 10.0:90.0³ | 10.0:90.0³ |
| Native α-LA¹ (mg mL⁻¹) | 4.06 | 3.85 | 2.23 | 0.37³ |
| Native β-LG B¹ (mg mL⁻¹) | 14.17 | 12.71 | 6.61 | 0.05³ |
| Native β-LG A¹ (mg mL⁻¹) | 8.93 | 7.60 | 3.86 | 0.02³ |
| Fat¹ (%) | 0.25 | 0.27 | 0.27 | 0.30³ |
| Lactose¹ (mmol kg⁻¹) | 136.3 | 137.7 | 135.7 | 135.9³ |
| Ash¹ (%) | 0.97 | 0.92 | 0.95 | 1.04³ |

| | | | | |
|---|---|---|---|---|
| ¹Measured in mixtures after heat treatment. LA=lactalbumin, LG=lactoglobulin. ²Measured in mixtures before heat treatment. CP=crude protein; TP=true protein; C=casein; NWP=native whey protein. ³Chemical composition of mixture before addition of UFR. | | | | |

### Example 7

The stirred yoghurts prepared in Example 6 were sensory profiled with regard to appearance and consistency. In addition to the yoghurts described in Example 6, a yoghurt named "Extra" was made in the same way as the yoghurt named "Control", but a whey protein:casein ratio of 20:80 was obtained. Intensity of appearance attributes (coarse; granular; shiny; ropy; thickness) and consistency attributes (viscosity; mealy; gritty; smooth) of stirred yoghurts was analyzed on a continuous scale from 1 to 9, see Table 8.

**Table 8**

| Yoghurt | Coarse | Granular | Shiny | Ropy | Thickness | Viscosity | Mealy | Gritty | Smooth |
|---|---|---|---|---|---|---|---|---|---|
| Control | 1.0 | 1.2 | 7.9 | 2.4 | 4.3 | 5.2 | 2.2 | 1.1 | 6.9 |
| BFH | 3.4 | 4.6 | 4.0 | 3.4 | 6.0 | 4.9 | 6.5 | 1.4 | 3.0 |
| BFL | 2.5 | 4.9 | 3.5 | 3.7 | 6.6 | 5.0 | 6.7 | 1.5 | 2.5 |
| AFH | 6.5 | 6.8 | 2.8 | 3.4 | 6.5 | 4.6 | 7.3 | 1.9 | 1.7 |
| Extra | 2.1 | 3.1 | 4,0 | 3.4 | 5.8 | 5.3 | 5.9 | 1.6 | 3.6 |

Control yoghurt obtained the lowest intensity of the attributes coarse, granular and mealy, and the highest intensity of the attributes shiny and smooth. Yoghurts BFH, BFL and AFH were perceived as granular and mealy. Also yoghurt Extra obtained relatively high intensity of the attribute mealy. Yoghurt Control and Extra were perceived as most viscous (consistency) of all the yoghurts.

### Example 8

The yoghurts prepared in Example 6 were sensory profiled with regard to flavor. Intensity of flavor attributes (yoghurt; acid; bitter; off-flavor; whey; oxidized) of stirred yoghurts was evaluated on a continuous scale from 1 to 9, see Table 9.

**Table 9**

| Yoghurt | Yoghurt | Acid | Bitter | Off-flavor | Whey | Oxidized |
|---|---|---|---|---|---|---|
| Control | 4.2 | 5.1 | 2.1 | 2.4 | 1.7 | 1.2 |
| BFH | 4.0 | 5.4 | 2.5 | 2.7 | 1.8 | 1.1 |
| BFL | 3.8 | 5.1 | 2.0 | 2.3 | 1.4 | 1.1 |
| AFH | 3.9 | 4.8 | 2.3 | 2.4 | 1.3 | 1.1 |
| Extra | 4.1 | 5.4 | 2.0 | 2.2 | 1.2 | 1.1 |

The flavor attributes; yoghurt, acid, bitter, whey, oxidized and off-flavor, were scarcely affected by the time of UFR-addition or the heat treatment temperature. Low intensities of the flavor attributes oxidized and whey were obtained.

### Example 9

The yoghurts prepared in Example 6 were studied with regard to particle size distribution measured by Mastersizer 3000, see Table 10. D₅₀ reports the particle size (µm) at which 50 % of the particles in the sample are smaller and 50 % are larger.

**Table 10**

| Yoghurt | D₅₀ |
|---|---|
| Control | 18.1 |
| BFH | 57.7 |
| BFL | 71.0 |
| AFH | 141.9 |

The smallest particle size distribution was measured in control yoghurt, and the largest particle size distribution was found in yoghurt AFH.

### Example 10

Fig. 4 shows pictures of the yoghurts prepared in Example 6.

The shiny appearance of yoghurt Control can be seen in Fig. 4. Yoghurt AFH appears as coarse and granular. BFH and BFL were perceived as mealy in the sensory analysis, however this cannot be visually judged by studying Fig. 4. BFH and BFL could visually be perceived as less shiny than yoghurt Control.

### References

Tipton, K. D., Elliott, T. A., Cree, M. G., Aarsland, A. A., Sanford, A. P. & Wolfe, R. R. (2007). Stimulation of net muscle protein synthesis by whey protein ingestion before and after exercise. Am J Physiol Endocrinol Metab, 292, 71-76
Baer, D. J., Stote, K. S., Paul, D. R., Harris, G. K., Rumpler, W. V. & Clevidence, B. A. (2011). Whey protein but not soy protein supplementation alters body weight and composition in free-living overweight and obese adults. The Journal of Nutrition*.*
Pichon, L., Potier, M., Tome, D., Mikogami, T., Laplaize, B., Martin-Rouas, C. & Fromentin, G. (2008). High-protein diets containing different milk protein fractions differently influence energy intake and adiposity in the rat. British Journal of Nutrition, 99, 739-748.
Pal, S. & Ellis, V. (2010). The chronic effects of whey proteins on blood pressure, vascular function, and inflammatory markers in overweight individuals. Obesity, 18, 1354-1359.
Hall, W. L., Millward, D. J., Long, S. J. & Morgan, L. M. (2003). Casein and whey exert different effects on plasma amino acid profiles, gastrointestinal hormone secretion and appetite. British Journal of Nutrition, 89, 239-248.
Lam, S. M. S., Moughan, P. J., Awati, A. & Morton, H. R. (2009). The influence of whey protein and glycomacropeptide on satiety in adult humans. Physiology & Behaviour, 96, 162-168.
Laahne, J. A. L. (2013). Nativt myseprotein gir større og raskere økning av aminosyrer i blod enn behandlede mysefraksjoner og lettmelk, men ikke raskere restitusjon av muskelfunksjon. MSc thesis. Norwegian school of sport sciences, Oslo, Norway.
Almaas, H., Cases, A.-L., Devold, T. G., Holm, H., Langsrud, T., Aabakken, L., Aadnoey, T. & Vegarud, G. E. (2006). In vitro digestion of bovine and caprine milk by human gastric and duodenal enzymes. International Dairy Journal, 16, 961-968.
Lucey, J. A., & Singh, H. (1998). Formation and physical properties of acid milk gels: a review. Food Research International, 30, 529-542.
Robinson, R. K., Lucey, J. A. & Tamime, A. Y. (2006). Manufacture of yoghurt. In A. Y. Tamime (Ed.). Fermented Milks (pp. 53-75). Oxford, UK: Blackwell Science Ltd.
Dannenberg, F. & Kessler, H.-G. (1987). Untersuchungen zur Reaktionskinetik der Molkenprotein-Denaturierung und deren technologischer Bedeutung. Chemie-Ingenieur-Technik, 59, 575-577.
Anema, S. G. (2001). Kinetics of the Irreversible Thermal Denaturation and Disulfide Aggregation of α-Lactalbumin in Milk Samples of Various Concentrations. Food Chemistry and Toxicology, 66, 2-9.
Patocka, G., Cervenkova, R., Narine, S. & Jelen, P. (2006). Rheological behavior of dairy products as affected by soluble whey protein isolate. International Dairy Journal, 16, 399-405.
Guggisberg, D., Eberhard, P. & Albrecht, B. (2007). Rheological characterization of set yoghurt produced with additives of native whey proteins. International Dairy Journal, 17, 1353-1359.
Codex standard for fermented milks, CODEX STAN 243-2003, pp. 1-11.
IDF. (2001). Milk - Determination of nitrogen content - Part 4: Determination of non-protein-nitrogen content. IDF 20-4:2001. Brussels, Belgium: International Dairy Federation.
IDF. (2004). Milk - Determination of casein-nitrogen content - Part 1: Indirect method (Reference method). IDF 29-1:2004. Brussels, Belgium: International Dairy Federation.
IDF. (2014). Milk and milk products - Determination of nitrogen content - Part 1: Kjeldahl principle and crude protein calculation. IDF 20-1:2014. Brussels, Belgium: International Dairy Federation.
Beyer, H. J. (1990). Zum Einfluss der Proteinkonzentration auf das Denaturierungsverhalten der Molkenproteine sowie die damit verbundenen rheologischen Veränderungen. PhD thesis, Technische Universität München-Weihenstephan. München, Germany.
Spiegel, T. (1999). Whey protein aggregation under shear conditions - effects of lactose and heating temperature on aggregate size and structure. International Journal of Food Science and Technology, 34, 523-531.
Hoffmann, T. (2011). *Membrane filtration and membrane filtration assembly.* Patent (WO 2011/115498). TINE SA, Oslo, Norway.

## Claims

1. A yoghurt comprising a content of protein in the range from 5.6 % to 20 % (w/w), a content of native whey proteins in the range from 4 to 70 mg/mL, and a weight ratio of whey protein to casein in a range from 22:78 to 50:50 (w/w).

2. The yoghurt of claim 1, wherein the protein content is in the range chosen from 6 % to 18 % (w/w), 5.6 % to 15 % (w/w), 6 % to 18 % (w/w), 6.5 % to 18 % (w/w), 7 % to 17 % (w/w), 7 % to 15 % (w/w), 7 % to 13 % (w/w), 7 % to 12 % (w/w), 8 % to 12 % (w/w), or 8 % to 11 % (w/w).

3. The yoghurt of claim 1, wherein the content of native whey proteins is in the range chosen from 4 to 65 mg/mL, 4 to 55 mg/mL, 4.5 to 65 mg/mL, 5 to 60 mg/mL, 5 to 55 mg/mL, 5 to 45 mg/mL, 5 to 40 mg/mL, 5.5 to 40 mg/mL, 6 to 40 mg/mL, 6 to 30 mg/mL, 8 to 40 mg/mL, 8 to 30 mg/mL, 10 to 40 mg/mL, or 10 to 30 mg/mL.

4. The yoghurt of claim 1, wherein the whey protein:casein ratio is in the range chosen from 25:75 to 45:55 (w/w), 25:75 to 40:60 (w/w), or 25:75 to 35:65 (w/w).

5. A method for manufacturing a yoghurt as defined in any one of claims 1 to 4, comprising the steps of:
a) providing raw milk;
b) separating the raw milk into a cream fraction and a skim milk fraction;
c) subjecting the skim milk fraction to microfiltration (MF) adapted to separate casein from whey protein and thereby obtaining a casein-rich fraction and a fraction of native whey protein;
d) providing a native whey protein concentrate by subjecting the fraction of native whey protein to ultrafiltration (UF) adapted to separate native whey protein from water;
e) mixing the casein-rich fraction and the native whey protein concentrate and thereby obtaining a mixture of casein and native whey protein wherein the whey protein to casein ratio is increased compared to the ratio of whey protein to casein in the raw milk;
f) subjecting the mixture of casein and native whey protein to heat treatment and thereby obtaining a heat treated mixture of casein and whey protein;
g) adding a starter culture to the heat treated mixture of casein and whey protein to provide a fermented mixture; and
h) cooling the fermented mixture;
**characterized in that**
- the mixture of casein and native whey protein obtained in step e) has a weight ratio of whey protein to casein in a range from 22:78 to 50:50; and
- the heat treatment of step f) is carried out by heating the mixture of casein and native whey protein at a temperature and for a time period sufficient to obtain denaturation of 30 to 70 % of the native whey protein of the mixture.

6. The method of claim 5, wherein the skim milk fraction obtained in step b) is subjected to microfiltration or bactofugation adapted to separate microorganisms from the skim milk fraction and thereby obtaining a microorganisms-rich fraction and a partly sterilized skim milk fraction before subjecting the partly sterilized skim milk fraction to the microfiltration of step c).

7. The method of claim 5, wherein the MF in step c) is carried out by using membranes with pore size from 0.05 µm to 0.2 µm.

8. The method of claim 5, wherein the UF in step d) is carried out by using membranes with cut-off from 1 kDa to 35 kDa.

9. A method for manufacturing a yoghurt as defined in any one of claims 1 to 4, comprising the steps of:
a) providing raw milk;
b) separating the raw milk into a cream fraction and a skim milk fraction;
c) subjecting the skim milk fraction to ultrafiltration (UF) adapted to obtain concentrated milk rich in casein and whey protein in the UF retentate;
d) providing a powder or concentrate of native whey protein;
e) mixing the protein-rich UF retentate obtained in step c) and the native whey protein powder or concentrate from step d) and thereby obtaining a mixture of casein and native whey protein;
f) subjecting the mixture of casein and native whey protein to heat treatment and thereby obtaining a heat treated mixture of casein and whey protein;
g) adding a starter culture to the heat treated mixture of casein and whey protein to provide fermentation of the mixture; and
h) cooling the fermented mixture;
**characterized in that**
- the mixture of casein and native whey protein obtained in step e) has a weight ratio of whey protein to casein in a range from 22:78 to 50:50; and
- the heat treatment of step f) is carried out by heating the mixture of casein and native whey protein at a temperature and for a time period sufficient to obtain denaturation of 30 to 70 % of the native whey protein of the mixture.

10. A method for manufacturing a yoghurt as defined in any one of claims 1 to 4, comprising the steps of:
a) providing raw milk;
b) separating the raw milk into a cream fraction and a skim milk fraction;
c) subjecting the skim milk fraction to microfiltration (MF) adapted to separate casein from whey protein and thereby obtaining a casein-rich fraction and a fraction of native whey protein;
d) providing a powder of native whey protein;
e) mixing the casein-rich fraction and the powder of native whey protein and thereby obtaining a mixture of casein and native whey protein;
f) subjecting the mixture of casein and native whey protein to heat treatment and thereby obtaining a heat treated mixture of casein and whey protein;
g) adding a starter culture to the heat treated mixture of casein and whey protein to provide fermentation of the mixture; and
h) cooling the fermented mixture;
**characterized in that**
- the mixture of casein and native whey protein obtained in step e) has a weight ratio of whey protein to casein in a range from 22:78 to 50:50; and
- the heat treatment of step f) is carried out by heating the mixture of casein and native whey protein at a temperature and for a time period sufficient to obtain denaturation of 30 to 70 % of the native whey protein of the mixture.

11. A method for manufacturing a yoghurt as defined in any one of claims 1 to 4, comprising the steps of:
a) providing raw milk;
b) separating the raw milk into a cream fraction and a skim milk fraction;
c) subjecting the skim milk fraction to microfiltration (MF) adapted to separate casein from whey protein and thereby obtaining a casein-rich fraction and a fraction of native whey protein;
d) providing a powder of native whey protein which is added to the fraction of native whey protein obtained in step c);
e) mixing the casein-rich fraction obtained in step c) and the native whey protein concentrate obtained in step d) and thereby obtaining a mixture of casein and native whey protein;
f) subjecting the mixture of casein and native whey protein to heat treatment and thereby obtaining a heat treated mixture of casein and whey protein;
g) adding a starter culture to the heat treated mixture of casein and whey protein to provide fermentation of the mixture; and
h) cooling the fermented mixture;
**characterized in that**
- the mixture of casein and native whey protein obtained in step e) has a weight ratio of whey protein to casein in a range from 22:78 to 50:50; and
- the heat treatment of step f) is carried out by heating the mixture of casein and native whey protein at a temperature and for a time period sufficient to obtain denaturation of 30 to 70 % of the native whey protein of the mixture.

12. The method of any one of claims 5, 9, 10 or 11, wherein the casein-rich fraction obtained in step c) is pasteurized before subjected to mixing with the native whey protein concentrate in step e).

13. The method of any one of claims 5, 9, 10 or 11 wherein the mixture of casein and native whey protein obtained in step e) is subjected to homogenization and thereby obtaining a homogenized mixture of casein and native whey protein to be heat treated in step f).

14. The method of any one of claims 5, 9, 10 or 11, wherein the heat treatment of step f) is carried out by heating the mixture of casein and native whey protein at a temperature of 75 °C for a time period of 5 minutes, or another temperature and time combination providing equivalent denaturation degree as 75°C for 5 minutes.

15. The method of claim 14, wherein the heat treatment of step f) is carried out by heating the mixture of casein and native whey protein at a temperature and for a time period selected from the group consisting of: 70°C for 5 minutes, 80°C for 1 minute, 85°C for 30 seconds, 90°C for 10 seconds, 95°C for 6 seconds, 100°C for 3 seconds, and 110°C for 2 seconds.
